# EUROPEAN PATENT APPLICATION

(11) **EP 4 509 354 A1**
(43) Date of publication of application: **19.02.2025**
(21) Application number: 23799135.1
(22) Date of filing: 17.03.2023
(51) Int. Cl.: B60L 58/10, B60L 58/27, H01M 10/615, H01M 10/625

(54) **BATTERY HEATING CONTROL METHOD AND APPARATUS, AND ELECTRIC VEHICLE AND MEDIUM**

(30) Priority: 06.05.2022 CN 202210486966
(71) Applicant: Contemporary Amperex Technology (Hong Kong) Limited, Hong Kong (HK)
(72) Inventor: CHEN, Xing, Ningde, Fujian 352100 (CN); YAN, Yu, Ningde, Fujian 352100 (CN); HUANG, Xiaojian, Ningde, Fujian 352100 (CN); LI, Zhanliang, Ningde, Fujian 352100 (CN); CHEN, Wei, Ningde, Fujian 352100 (CN)
(74) Representative: Ziebig Hengelhaupt Intellectual Property Attorneys Patentanwaltskanzlei PartGmbB
(86) International application number: PCT/CN2023/082218
(87) International publication number: WO 2023/213147

(57) **Abstract**

Provided are a battery heating control method and apparatus, an electric vehicle, and a storage medium. The method includes: detecting whether the state of a battery meets a preset state condition when a first signal is detected; and performing heating control on the battery according to the situation in which the state of the battery meets the preset state condition. The pre-detection logic of a battery heating function is triggered by detecting the first signal. Since the first signal includes an interaction signal between a person and a vehicle, the pre-detection logic of the state of the battery is prior to the in-place condition of a driver. As a result, after it is determined that the state of the battery meets the condition, the battery heating function can be quickly started at any time.

## Description

### CROSS-REFERENCE TO RELATED APPLICATIONS

The present application claims priority to Chinese patent application 202210486966.5 entitled "BATTERY HEATING CONTROL METHOD AND APPARATUS, ELECTRIC VEHICLE, AND MEDIUM" and filed on May 6, 2022, the entire contents of which are incorporated herein by reference.

### TECHNICAL FIELD

The present application relates to the technical field of automotive electronics, and in particular, to a battery heating control method and apparatus, an electric vehicle, and a medium.

### BACKGROUND

With the development of new energy electric vehicles, the use of power battery groups of lithium batteries is becoming increasingly widespread. However, due to the electrochemical properties thereof, high-power charging and discharging cannot be carried out at a low temperature. In this case, the discharging efficiency of the battery is greatly reduced, and thus, heating is needed to raise the battery temperature to the normal working temperature.

In related technologies, the limited control of battery heating is only achieved based on the battery voltage, battery temperature, and remaining capacity detected by a battery management system (BMS) without considering the perspective of the entire vehicle. Therefore, the existing battery heating control logic is too simple, and there is a problem of long user waiting time during the heating process.

### SUMMARY OF THE INVENTION

In view of the above problems, the present application provides a battery heating control method and apparatus, an electric vehicle, and a storage medium. The battery heating control logic is comprehensive and sophisticated, and the user waiting time during the heating process can be shortened.

A first aspect of the present application provides a battery heating control method. The method includes: detecting whether the state of a battery meets a preset state condition when determining that a first signal is detected; and performing heating control on the battery according to the situation in which the state of the battery meets the preset state condition, wherein the first signal includes an interaction signal between a person and a vehicle.

In the technical solutions of the embodiments of the present application, the pre-detection logic of a battery heating function is triggered by detecting the first signal. Since the first signal includes an interaction signal between a person and a vehicle, the pre-detection logic of the state of the battery is prior to the in-place condition of a driver. As a result, after it is determined that the state of the battery meets the condition, the battery heating function can be quickly started at any time. Therefore, this method of combining vehicle self-detection with battery self-detection can accurately identify heating needs and avoid ineffective heating. At the same time, the battery self-heating can be quickly started, and the person waiting time during the heating process can be further shortened. Moreover, the battery heating control logic is more comprehensive and sophisticated than that of the existing solutions.

In some embodiments, the determining that a first signal is detected includes: determining that an interaction signal between a person and a vehicle is detected based on a detected key signal and/or vehicle unlocking signal and/or remote control signal. By detecting the key signal, the vehicle unlocking signal, and the remote control signal as interaction between a person and a vehicle before a driver is in place, the accuracy is higher.

In some embodiments, the detecting whether the state of a battery meets a preset state condition includes: acquiring battery voltage, battery remaining capacity, and battery temperature; and judging whether the state of the battery meets the preset state condition according to the battery voltage, the battery remaining capacity, and the battery temperature. The battery voltage, the battery remaining capacity, and the battery temperature are used as parameters for judging the state of the battery to judge whether the battery self-heating can be started or needs to be started, so as to ensure that after the battery is heated to the normal working temperature, the battery can be charged and discharged at high power.

In some embodiments, the judging whether the state of the battery meets the preset state condition according to the battery voltage, the battery remaining capacity, and the battery temperature includes: judging whether the battery temperature is lower than a limit value of the working temperature if the battery remaining capacity is higher than a lower limit value of the capacity and the battery voltage is higher than a lower limit value of the voltage; if the battery temperature is lower than the limit value of the working temperature, determining that the state of the battery meets the preset state condition; and if the battery temperature is not lower than the limit value of the working temperature, determining that the state of the battery does not meet the preset state condition. In a case that first, it is determined that the battery voltage and the battery remaining capacity meet the conditions, and then, whether the battery temperature is lower than the normal working temperature is judged, so as to ensure that after the battery is heated to the normal working temperature, the battery voltage and the battery remaining capacity can meet the needs for high-power charging and discharging.

In some embodiments, the method further includes: judging whether the state of the vehicle is abnormal according to a vehicle sensor signal after the first signal is detected; and performing the step of detecting whether the state of the battery meets the preset state condition if the state of the vehicle is not abnormal. After the first signal is detected, whether the state of the vehicle is abnormal can be judged according to the vehicle sensor signal, so that the safety of battery heating can be ensured.

In some embodiments, the performing heating control on the battery includes: starting a battery heating function when determining that a second signal is detected, where the second signal includes any one of a driver in-place signal and a heating indication signal. Further, by detecting the second signal, namely the driver in-place signal or the direct heating indication signal, heating needs can be accurately identified, and ineffective heating can be avoided.

In some embodiments, the determining that a second signal is detected includes: determining that a driver in-place signal is detected when a driver door opening signal and a driver seat signal are detected. By detecting a signal for indicating that a driver door is opened and a signal for indicating that a driver already sits on a seat, whether the driver is in place can be judged more accurately.

In some embodiments, the method further includes: detecting whether a vehicle locking signal is received and whether a key signal disappears during the detection of the driver door opening signal and the driver seat signal; and stopping detecting the driver door opening signal and the driver seat signal if it is detected that a key signal disappears or a vehicle locking signal is received. During the process of judging whether the driver is in place, the key signal and the vehicle locking signal are combined to judge whether the driver leaves the vehicle, so as to avoid the infinite loop of the driver in-place detection logic.

In some embodiments, the method further includes: starting timing when starting to detect the driver door opening signal and the driver seat signal; and stopping detecting the driver door opening signal and the driver seat signal if the driver door opening signal and the driver seat signal are still not detected when the timing reaches a preset duration. During the process of judging whether the driver is in place, the determination of the repeated detection time is combined to avoid the driver from staying around the vehicle for a long time, resulting in infinite loop of the driver in-place detection logic.

In some embodiments, the method further includes: increasing the number of detections by 1 for each detection of the driver door opening signal and the driver seat signal during the detection of the driver door opening signal and the driver seat signal; and stopping detecting the driver door opening signal and the driver seat signal if the driver door opening signal and the driver seat signal are still not detected when the number of detections reaches a preset number. During the process of judging whether the driver is in place, the determination of the repeated number of detections is combined to avoid the driver from staying around the vehicle for a long time, resulting in infinite loop of the driver in-place detection logic.

In some embodiments, after starting the battery heating function, the method further includes: outputting prompt information for inquiring whether to agree to continue heating to a display device; continuing battery heating when a response for indicating to continue heating is received or no response is received after waiting for a preset time; and ending the battery heating function when a response for indicating not to continue heating is received. After the battery self-heating is started, the mode of a human-computer interaction interface is used for notifying the user that the vehicle is in a heating mode and inquiring the user whether to agree to continue, thereby meeting the need of the user for controlling heating.

In some embodiments, the method further includes: outputting a feedback result for indicating to exit the battery heating logic to the display device when a signal for indicating that battery heating is not needed is detected. The exiting of the heating logic caused by different reasons is notified to the user in the mode of the human-computer interaction interface, thereby facilitating the user to understand the situation.

A second aspect of the present application provides a battery heating control apparatus. The apparatus includes: a state pre-detection module, configured to detect whether the state of a battery meets a preset state condition when it is determined that a first signal is detected; and

a heating control module, configured to perform heating control on the battery according to the situation in which the state of the battery meets the preset state condition.

A third aspect of the present application provides an electric vehicle, including a memory, a processor, and a computer program stored in the memory and capable of running on the processor, where the processor, when executing the program, implements the steps of the method according to the first aspect as mentioned above.

A fourth aspect of the present application provides a computer-readable storage medium in which a computer program is stored, where the program, when executed by a processor, implements the steps of the method according to the first aspect as mentioned above.

The above description merely provides an overview of the technical solutions of the present application. In order to more clearly understand the technical means of the present application, the present application may be implemented according to the content of the specification. Furthermore, in order to make the above and other objectives, features, and advantages of the present application more obvious and understandable, the detailed description of the present application is listed below.

### DESCRIPTION OF DRAWINGS

By reading the detailed description of the preferred embodiments below, various other advantages and benefits will become apparent to those of ordinary skill in the art. The drawings are for the purpose of illustrating the preferred embodiments only and are not to be considered a limitation to the present application. Moreover, in all of the drawings, the same components are indicated by the same reference numerals. In the drawings:
FIG. 1 is a flowchart of an embodiment of a battery heating control method according to an exemplary embodiment in the present application;
FIG. 2 is a flowchart of specific implementation of battery heating control according to an exemplary embodiment in the present application;
FIG. 3 is a schematic structural diagram of a battery heating control apparatus according to an exemplary embodiment in the present application;
FIG. 4 is a schematic diagram of hardware structures of an electric vehicle according to an exemplary embodiment in the present application; and
FIG. 5 is a schematic structural diagram of a storage medium according to an exemplary embodiment in the present application.

### DETAILED DESCRIPTION

Embodiments of the technical solutions of the present application will be described in detail below with reference to the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application. The terms used herein are intended only for the purpose of describing specific embodiments and are not intended to limit the present application. The terms "including" and "having" and any variations thereof in the specification and claims of the present application and in the description of the drawings are intended to cover non-exclusive inclusions.

In the description of the embodiments of the present application, the technical terms "first", "second", and the like are used only to distinguish different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

The reference to "embodiments" herein means that specific features, structures or characteristics described in combination with embodiments may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that three relationships may exist. For example, A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two). Similarly, "multiple groups" refers to two or more (including two) groups, and "multiple sheets" refers to two or more (including two) sheets.

At present, from the perspective of the development of the market situation, power batteries are increasingly more widely used. Power batteries are not only applied in energy storage power source systems such as water, fire, wind, and solar power stations, but also widely applied in electric transportation tools, such as electric bicycles, electric motorcycles, and electric vehicles, as well as many fields, such as military equipment and aerospace. With the continuous expansion of the application field of power batteries, the market demand is also constantly expanding.

The inventors notice that due to the electrochemical properties of the battery, high-power charging and discharging cannot be carried out at a low temperature. In this case, the discharging efficiency of the battery is greatly reduced, and thus, heating is needed to raise the battery temperature to the normal working temperature.

However, the existing solution only provides limited strategies for controlling battery heating based on a BMS, lacks a comprehensive battery heating start logic considered from the perspective of the entire vehicle, and has the problem of long user waiting time during the heating process.

In order to shorten the user waiting time during the heating process, through the research, the applicant finds that the method of combining vehicle self-detection with battery self-detection can be adopted to achieve the purpose of quickly starting the battery self-heating. That is, before a driver is in place, a pre-detection logic for detecting whether the state of a battery meets a preset state condition is triggered by detecting a first signal (including an interaction signal between a person and a vehicle). When it is judged that the state of the battery meets the preset state condition, heating control is performed on the battery, so that the battery self-heating is started immediately as soon as the driver gets on the vehicle to shorten the user waiting time.

The battery heating control method disclosed in the embodiment of the present application can be applied to a vehicle control unit (VCU) of an electric vehicle. Usually, due to the electrochemical properties of a battery group, the output capacity rapidly decreases as the temperature decreases. Especially, in the cold winter with a low temperature, the output capacity of the battery group is greatly affected. Therefore, if new energy electric vehicles are not provided with effective battery heating systems, the new energy electric vehicles will be difficult to promote and use in high-altitude areas. Accordingly, heating is needed to raise the battery temperature to the normal working temperature to meet the need of the vehicle for the output capacity.

In order to make those skilled in the art better understand the solutions of the present application, the technical solutions in the embodiments of the present application will be described clearly and completely with reference to the drawings in the embodiments of the present application.

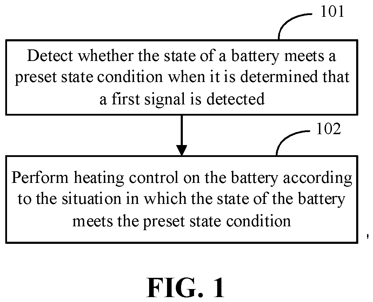

FIG. 1 is a flowchart of an embodiment of a battery heating control method according to an exemplary embodiment in the present application. The battery heating control method includes the following steps:
Step 101: Whether the state of a battery meets a preset state condition is detected when it is determined that a first signal is detected.

The first signal is used for indicating some control signals for a vehicle before a driver is in place. The first signal may include an interaction signal between a person and a vehicle, and certainly may also include an interaction signal between a vehicle and a battery swapping station.

In this embodiment, taking the interaction between a person and a vehicle as an example, when a user uses the vehicle, a key and a client on a mobile phone are necessary choices for controlling the vehicle. Therefore, the interaction signal between a person and a vehicle may be derived from the key of the vehicle on the one hand, and may also be derived from the remote control of the client on the mobile phone on the other hand.

The above key may be in any form of conventional keys or card keys.

For a detection process of an interaction signal between a person and a vehicle, in an embodiment, it can be determined that an interaction signal between a person and a vehicle is detected based on a detected key signal. The key signal may be a wireless signal sent by the key or a signal for indicating that the key is inserted into a vehicle door, which is not specifically limited in the present application.

In another embodiment, it can be determined that an interaction signal between a person and a vehicle is detected based on a detected vehicle unlocking signal. The vehicle unlocking signal may be a signal generated by the user approaching the vehicle door and pressing the key on the vehicle door.

In still another embodiment, it can be determined that an interaction signal between a person and a vehicle is detected based on a detected remote control signal. The remote control signal may be a signal generated by the remote control of the mobile phone of the user.

Based on the interaction signal detection method provided above, since the key signal, the vehicle unlocking signal, and the remote control signal can all reflect the possibility of the user using the vehicle later, using these signals as the interaction between a person and a vehicle before a driver is in place results in higher accuracy.

In an embodiment, for a process of detecting whether the state of a battery meets a preset state condition, specifically, the battery voltage, the battery remaining capacity, and the battery temperature can be acquired, and then, whether the state of the battery meets the preset state condition can be judged according to the battery voltage, the battery remaining capacity, and the battery temperature.

The battery voltage, the battery remaining capacity, and the battery temperature are used as battery state parameters to judge whether the battery self-heating can be started or needs to be started, so as to ensure that after the battery is heated to the normal working temperature, the battery can be charged and discharged at high power.

In a specific embodiment, the battery voltage can be compared with the lower limit value of the voltage, and the battery remaining capacity can be compared with the lower limit value of the capacity. If the battery voltage is higher than the lower limit value of the voltage and the battery remaining capacity is higher than the lower limit value of the capacity, it indicates that the battery can meet the high-power charging and discharging needs of the vehicle during running. Further, the battery temperature is compared with the limit value of the working temperature to determine whether heating is necessary. If the battery temperature is lower than the limit value of the working temperature, it indicates that the battery needs to be heated to ensure the discharging efficiency of the battery, thereby determining that the state of the battery meets the preset state condition. If the battery temperature is not lower than the limit value of the working temperature, it indicates that even without heating the battery, the discharging efficiency of the battery can be ensured, thereby determining that the state of the battery does not meet the preset state condition.

The lower limit value of the voltage is the minimum voltage requirement for charging and discharging of the battery, the lower limit value of the capacity is the minimum capacity requirement for vehicle running, and the limit value of the working temperature is the minimum temperature requirement for ensuring the normal discharging efficiency of the battery.

It should be noted that to ensure the safety of battery heating, after the first signal is detected, whether the state of the vehicle is abnormal can be judged according to the vehicle sensor signal. If the state of the vehicle is not abnormal, whether the state of the battery meets the preset state condition is detected.

The battery heating process involves the operation of various components in a motor control system. Therefore, the state of the vehicle can be determined by judging whether each sensor signal in the motor control system is normal to ensure the normal starting of battery heating and ensure the safety of subsequent battery heating.

Step 102: Heating control is performed on the battery according to the situation in which the state of the battery meets the preset state condition.

In an optional embodiment, a second signal is detected. When the second signal is detected, a battery heating function is started.

The second signal includes any one of a driver in-place signal and a heating indication signal. Therefore, further, by detecting the driver in-place signal or the direct heating indication signal, heating needs can be accurately identified, and ineffective heating can be avoided.

The driver in-place signal indicates that the driver sits on the vehicle, and the vehicle is in a ready state and will be started to run at any time.

In an embodiment, a driver door opening signal and a driver seat signal can be detected. When the driver door opening signal and the driver seat signal are detected, it is determined that the driver in-place signal is detected. As long as one of the two signals is not detected, it indicates that the driver is not in place, and further detection is needed.

The driver door opening signal indicates that the user already opens the driver door and is ready to get on the vehicle. The driver seat signal indicates that the user already sits on the driver seat. The driver door opening signal can be detected by a switch sensor on the driver door. The driver seat signal can be detected by a pressure sensor on the driver seat. By detecting a signal for indicating that the driver door is opened and a signal for indicating that the driver already sits on the seat, whether the driver is in place can be judged more accurately.

It should be noted that since as long as one of the driver door opening signal and the driver seat signal is not detected, the two signals need to be further detected, based on this, the key signal and the vehicle locking signal are combined to judge whether the driver leaves the vehicle, so as to avoid the infinite loop of the driver in-place detection logic. The specific implementation process includes: whether a vehicle locking signal is received and whether a key signal disappears are detected during the detection of the driver door opening signal and the driver seat signal. If it is detected that a key signal disappears or a vehicle locking signal is received, it indicates that the user only passes by the vehicle or stays around the vehicle for a period of time before leaving. In this case, the detection of the driver door opening signal and the driver seat signal is stopped to exit the battery heating logic.

Further, during the process of judging whether the driver is in place, the determination condition of the repeated detection time or the repeated number of detections is further combined to avoid the driver from staying around the vehicle for a long time, resulting in infinite loop of the driver in-place detection logic. The specific implementation process includes the following two embodiments:
In the first embodiment, timing is started when starting to detect the driver door opening signal and the driver seat signal. If the driver door opening signal and the driver seat signal are still not detected when the timing reaches a preset duration, it indicates that the user stays around the vehicle for a relatively long time. In this case, the detection of the driver door opening signal and the driver seat signal is stopped.

In the second embodiment, during the detection of the driver door opening signal and the driver seat signal, the number of detections is increased by 1 for each detection of the driver door opening signal and the driver seat signal. If the driver door opening signal and the driver seat signal are still not detected when the number of detections reaches a preset number, it indicates that the user stays around the vehicle for a relatively long time. In this case, the detection of the driver door opening signal and the driver seat signal is stopped.

In a possible embodiment, after a battery heating function is started, the mode of a human-computer interaction interface can be used for notifying the user that the vehicle is in a heating mode and inquiring the user whether to agree to continue, thereby meeting the need of the user for controlling heating.

The specific implementation process includes: prompt information for inquiring whether to agree to continue heating is outputted to a display device; battery heating is continued when a response for indicating to continue heating is received or no response is received after waiting for a preset time; and the battery heating function is ended when a response for indicating not to continue heating is received. The display device may be a vehicle display screen or a mobile phone, which is not specifically limited in the present application.

Further, when a signal for indicating that battery heating is not needed is detected, a feedback result for indicating to exit the battery heating logic can also be outputted to the display device.

For the process from step 101 to step 102, the signal for indicating that battery heating is not needed may include any one of the following: the state of the vehicle is abnormal, the battery remaining capacity is not higher than the lower limit value of the capacity, the battery voltage is not higher than the lower limit value of the voltage, the driver door opening signal and the driver seat signal are still not detected when the timing reaches the preset duration, the driver door opening signal and the driver seat signal are still not detected when the number of detections reaches a preset number, and the response for indicating not to continue heating is received.

It can be seen that the exiting of the heating logic caused by different reasons is also notified to the user in the mode of the human-computer interaction interface, thereby facilitating the user to understand the situation.

It should be noted that after executing step 102, whether a battery heating program is ended can also be determined according to a preset heating ending condition. The heating ending condition may be as follows: the battery temperature reaches the normal working temperature, or it is detected that the vehicle starts to run.

Thus, the battery heating control process shown in FIG. 1 is completed. The pre-detection logic of a battery heating function is triggered by detecting the first signal. Since the first signal includes an interaction signal between a person and a vehicle, the pre-detection logic of the state of the battery is prior to the in-place condition of a driver. As a result, after it is determined that the state of the battery meets the condition, the battery heating function can be quickly started at any time. Therefore, this method of combining vehicle self-detection with battery self-detection can accurately identify heating needs and avoid ineffective heating. At the same time, the battery self-heating can be quickly started, and the person waiting time during the heating process can be further shortened. Moreover, the battery heating control logic is more comprehensive and sophisticated than that of the existing solutions.

For the technical solution provided in the above embodiment, a specific embodiment is provided below to comprehensively explain the solution of the present application.

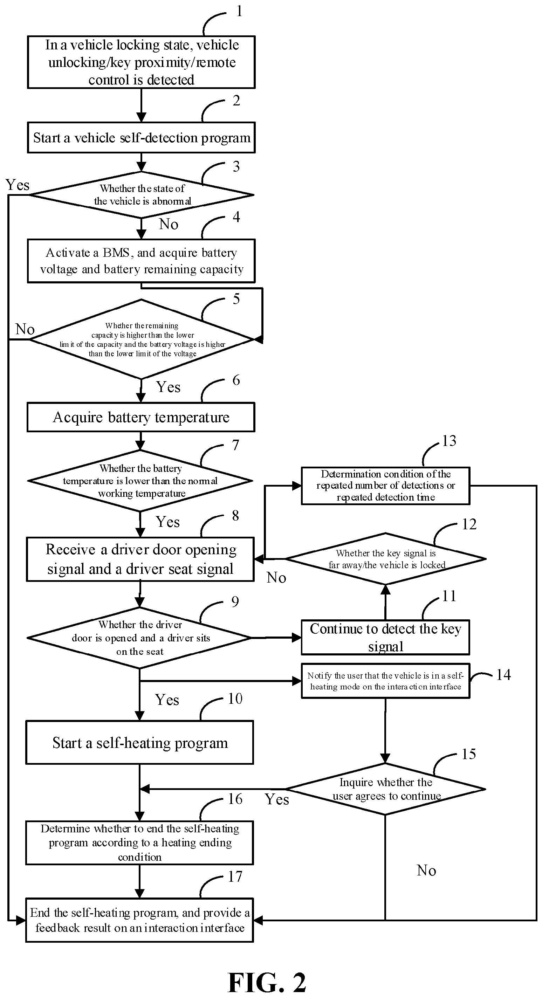

FIG. 2 is a flowchart of specific implementation of battery heating control according to an exemplary embodiment in the present application, including the following steps:
Step 1: In a vehicle locking state, a vehicle unlocking signal, or a wireless signal of key proximity, or a remote control signal is detected, where the wireless signal of key proximity refers to the above key signal.
Step 2: A vehicle self-detection program is started.
Step 3: Whether the state of a vehicle is abnormal is judged according to a vehicle sensor signal, where if the state of the vehicle is not abnormal, step 4 is executed; and if the state of the vehicle is abnormal, step 17 is executed.
Step 4: If the state of the vehicle is not abnormal, a BMS is activated, and the battery voltage and the battery remaining capacity are acquired.
Step 5: The acquired battery voltage and battery remaining capacity are respectively compared with the lower limit value of the voltage and lower limit value of the capacity preset by a self-heating protection strategy, so as to judge whether a self-heating starting program can be executed continuously, where if the condition for continuing execution is not met, step 17 is executed; and if the condition is met, step 6 is executed.
Step 6: The current battery temperature is acquired.
Step 7: Whether the battery temperature is lower than the limit value of the normal working temperature of the battery preset by the self-heating protection strategy is judged, where if the battery temperature is not lower than the limit value, the self-heating starting program is ended, and there is no need to provide a feedback on result information; and if the battery temperature is lower than the limit value, step 8 is executed.
Step 8: A driver door opening signal and a driver seat signal are received.
Step 9: Whether a driver door is opened and whether a driver already sits on a seat are determined to judge whether the driver is in place, where if the two conditions are met, step 10 is executed; and if one of the two conditions is not met or the two conditions are not met, step 11 is executed.
Step 10: A self-heating program is started.
Step 11: The key signal is detected continuously.
Step 12: If it is detected that a key signal disappears or a vehicle locking signal is received, the self-heating starting program is ended, and there is no need to provide a feedback on result information; and if it is not detected that the key signal disappears or the vehicle locking signal is not received, step 8 is executed repeatedly to wait for a signal for indicating that the driver door is opened and a signal for indicating that the driver sits on the seat.
Step 13: A determination condition of the repeated number of detections or the repeated detection time is set; and after the number or time for repeatedly executing steps 8, 9, 11, and 12 reaches the set repeated number of detections or repeated detection time, step 17 is executed.
Step 14: After the self-heating program is started, the user is notified that the vehicle is already in a self-heating mode on an interaction interface.
Step 15: Whether the user agrees to continue is inquired on the interaction interface, where if the user does not agree to continue, step 17 is executed; and if the user agrees to continue or does not perform any operation for a period of time, the self-heating program is executed continuously by default, and there is no need to exit the self-heating program.
Step 16: After the self-heating program is started, whether the self-heating program needs to be ended is determined according to a heating ending condition preset by the heating protection strategy, where if the self-heating program needs to be ended, step 17 is executed.
Step 17: The self-heating program is ended, and a feedback result is provided on the interaction interface.

Thus, the specific battery heating control process shown in FIG. 2 is completed.

Corresponding to the embodiment of the above battery heating control method, the present application further provides an embodiment of a battery heating control apparatus.

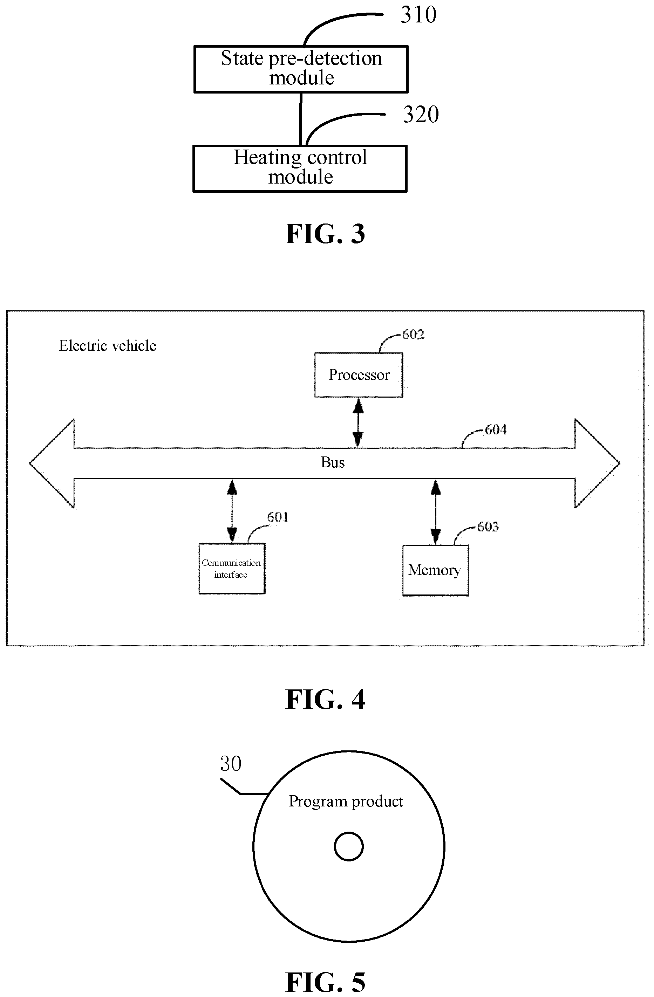

FIG. 3 is a schematic structural diagram of a battery heating control apparatus according to an exemplary embodiment in the present application. The apparatus is configured to execute the battery heating control method provided in any one of the above embodiments. As shown in FIG. 3, the battery heating control apparatus includes:
a state pre-detection module 310, configured to detect whether the state of a battery meets a preset state condition when it is determined that a first signal is detected; and
a heating control module 320, configured to perform heating control on the battery according to the situation in which the state of the battery meets the preset state condition.

The specific implementation processes of the functions and roles of each unit in the above apparatus refer to the implementation processes of the corresponding steps in the above method, and will not be repeated here.

Since the embodiment of the apparatus basically corresponds to the embodiment of the method, the related portions refer to the description of the embodiment of the method. The embodiment of the apparatus described above is only exemplary. The units described as separate components may or may not be physically separated, and components displayed as units may or may not be physical units, that is, may be located in one place, or may be distributed to a plurality of network units. Some or all of the modules may be selected according to actual needs to achieve the objectives of the solutions in the present application. Those skilled in the art can understand and implement the present application without creative efforts.

An embodiment of the present application further provides an electric vehicle corresponding to the battery heating control method provided in the above embodiment, so as to execute the above battery heating control method.

FIG. 4 is a schematic diagram of hardware structures of an electric vehicle according to an exemplary embodiment in the present application. The electric vehicle includes: a communication interface 601, a processor 602, a memory 603, and a bus 604, where the communication interface 601, the processor 602, and the memory 603 communicate with each other through the bus 604. The processor 602 can execute the battery heating control method described above by reading and executing a machine-executable instruction corresponding to the control logic of the battery heating control method in the memory 603. The specific content of the method refers to the above embodiment, and will not be repeated here.

The memory 603 mentioned in the present application may be any electronic, magnetic, optical, or other physical storage apparatuses, and may include storage information, such as executable instructions and data. Specifically, the memory 603 may be a random access memory (RAM), a flash memory, a storage drive (such as a hard disk drive), any type of storage disk (such as an optical disk or a digital video disk (DVD)), a similar storage medium, or a combination thereof. The communication connection between the system network element and at least one of the other network elements is achieved through at least one communication interface 601 (which may be a wired or wireless interface), and the Internet, a wide area network, a local area network, a metropolitan area network, and the like may be used.

The bus 604 may be an industry standard architecture (ISA) bus, a peripheral component interconnect (PCI) bus, an extended industry standard architecture (EISA) bus, or the like. The bus may be classified as an address bus, a data bus, a control bus, or the like. The memory 603 is configured to store a program, and the processor 602 executes the program after receiving an execution instruction.

The processor 602 may be an integrated circuit chip and has a signal processing capability. In an implementation process, each step of the above method may be completed by an integrated logic circuit of hardware in the processor 602 or an instruction in a software form. The above processor 602 may be a general-purpose processor, including a central processing unit (CPU), a network processor (NP), or the like, and may also be a digital signal processor (DSP), an application specific integrated circuit (ASIC), a field-programmable gate array (FPGA), or other programmable logic devices, discrete gate or transistor logic devices, and discrete hardware components. Various methods, steps and logical block diagrams disclosed in the embodiments of the present application may be implemented or executed. The general-purpose processor may be a microprocessor or may be any conventional processor. The steps of the method disclosed in combination with the embodiments of the present application may be directly executed by a hardware decoding processor, or may be executed by a combination of hardware and software modules in a decoding processor.

The electric vehicle provided in the embodiment of the present application has the same inventive concept as the battery heating control method provided in the embodiment of the present application, and has the same beneficial effects as the method used, operated, or implemented.

An embodiment of the present application further provides a computer-readable storage medium corresponding to the battery heating control method provided in the above embodiment. As shown in FIG. 5, the computer-readable storage medium is an optical disk 30 in which a computer program (namely a program product) is stored. The computer program, when executed by a processor, will execute the battery heating control method provided in any of the above embodiments.

It should be noted that the computer-readable storage medium may also include, but is not limited to, a phase-change RAM (PRAM), a static RAM (SRAM), a dynamic RAM (DRAM), other types of RAMs, a read-only memory (ROM), an electrically erasable programmable read-only memory (EEPROM), a flash memory, or other optical and magnetic storage media, which are not elaborated here.

The computer-readable storage medium provided in the above embodiment of the present application has the same inventive concept as the battery heating control method provided in the embodiment of the present application, and has the same beneficial effects as the method used, operated, or implemented by the stored application program.

Other embodiments of the present application will be apparent to those skilled in the art after consideration of the specification and practice of the present invention disclosed here. The present application is intended to cover any variations, uses, or adaptive changes of the present application. These variations, uses, or adaptive changes follow the general principles of the present application and include common general knowledge or commonly used technical means in the art that are not disclosed in the present application. The specification and embodiments are only considered to be exemplarily, and the true scope and spirit of the present application are indicated by the following claims.

It should also be noted that the terms "include", "contain" or any other variants thereof are intended to cover non-exclusive inclusions. Therefore, a process, method, commodity, or device including a series of elements includes not only those elements, but also other elements that are not explicitly listed, or further includes elements inherent to such process, method, commodity, or device. In a case without more limitations, an element defined by "including a ..." does not exclude that the process, method, commodity, or device including the element further has other identical elements.

The above descriptions are merely preferred embodiments of the present application, and are not intended to limit the present application. Any modifications, equivalent replacements, improvements, and the like made within the spirit and principle of the present application shall be included within the scope of protection of the present application.

## Claims

1. A battery heating control method, wherein the method comprises:
detecting whether the state of a battery meets a preset state condition when determining that a first signal is detected; and
performing heating control on the battery according to the situation in which the state of the battery meets the preset state condition,
wherein the first signal comprises an interaction signal between a person and a vehicle.

2. The method according to claim 1, wherein the determining that a first signal is detected comprises:
determining that an interaction signal between a person and a vehicle is detected based on a detected key signal and/or vehicle unlocking signal and/or remote control signal.

3. The method according to claim 1 or 2, wherein the detecting whether the state of a battery meets a preset state condition comprises:
acquiring battery voltage, battery remaining capacity, and battery temperature; and
judging whether the state of the battery meets the preset state condition according to the battery voltage, the battery remaining capacity, and the battery temperature.

4. The method according to claim 3, wherein the judging whether the state of the battery meets the preset state condition according to the battery voltage, the battery remaining capacity, and the battery temperature comprises:
judging whether the battery temperature is lower than a limit value of the working temperature if the battery remaining capacity is higher than a lower limit value of the capacity and the battery voltage is higher than a lower limit value of the voltage;
determining that the state of the battery meets the preset state condition if the battery temperature is lower than the limit value of the working temperature; and
determining that the state of the battery does not meet the preset state condition if the battery temperature is not lower than the limit value of the working temperature.

5. The method according to any one of claims 1 to 4, wherein the method further comprises:
judging whether the state of the vehicle is abnormal according to a vehicle sensor signal after the first signal is detected; and
performing the step of detecting whether the state of the battery meets the preset state condition if the state of the vehicle is not abnormal.

6. The method according to any one of claims 1 to 5, wherein the performing heating control on the battery comprises:
starting a battery heating function when determining that a second signal is detected,
wherein the second signal comprises any one of a driver in-place signal and a heating indication signal.

7. The method according to claim 6, wherein the determining that a second signal is detected comprises:
determining that a driver in-place signal is detected when a driver door opening signal and a driver seat signal are detected.

8. The method according to claim 7, wherein the method further comprises:
detecting whether a vehicle locking signal is received and whether a key signal disappears during the detection of the driver door opening signal and the driver seat signal; and
stopping detecting the driver door opening signal and the driver seat signal if it is detected that a key signal disappears or a vehicle locking signal is received.

9. The method according to claim 7, wherein the method further comprises:
starting timing when starting to detect the driver door opening signal and the driver seat signal; and
stopping detecting the driver door opening signal and the driver seat signal if the driver door opening signal and the driver seat signal are still not detected when the timing reaches a preset duration.

10. The method according to claim 7, wherein the method further comprises:
increasing the number of detections by 1 for each detection of the driver door opening signal and the driver seat signal during the detection of the driver door opening signal and the driver seat signal; and
stopping detecting the driver door opening signal and the driver seat signal if the driver door opening signal and the driver seat signal are still not detected when the number of detections reaches a preset number.

11. The method according to any one of claims 1 to 10, wherein after starting the battery heating function, the method further comprises:
outputting prompt information for inquiring whether to agree to continue heating to a display device;
continuing battery heating when a response for indicating to continue heating is received or no response is received after waiting for a preset time; and
ending the battery heating function when a response for indicating not to continue heating is received.

12. The method according to any one of claims 1 to 10, wherein the method further comprises:
outputting a feedback result for indicating to exit the battery heating logic to a display device when a signal for indicating that battery heating is not needed is detected.

13. A battery heating control apparatus, wherein the apparatus comprises:
a state pre-detection module, configured to detect whether the state of a battery meets a preset state condition when it is determined that a first signal is detected; and
a heating control module, configured to perform heating control on the battery according to the situation in which the state of the battery meets the preset state condition.

14. An electric vehicle, comprising a memory, a processor, and a computer program stored in the memory and capable of running on the processor, wherein the processor, when executing the program, implements the steps of the method according to any one of claims 1 to 12.

15. A computer-readable storage medium in which a computer program is stored, wherein the program, when executed by a processor, implements the steps of the method according to any one of claims 1 to 12.
